# EUROPÄISCHE PATENTSCHRIFT

(11) **EP 2 756 744 B1**
(45) Veröffentlichungstag und Bekanntmachung des Hinweises auf die Patenterteilung: **20.01.2016**
(21) Anmeldenummer: 13004886.1
(22) Anmeldetag: 11.10.2013
(51) Int. Cl.: A01C 7/08

(54) **Verteilerkopf für eine Sä- und/oder Düngemaschine**
Distribution head for a sowing or fertilising machine
Tête de distribution pour un semoir ou un distributeur d'engrais

(30) Priorität: 16.01.2013 DE 102013000758
(43) Veröffentlichungstag der Anmeldung: 23.07.2014
(73) Patentinhaber: Alois Pöttinger Maschinenfabrik Ges.m.b.H., 4710 Grieskirchen (AT)
(72) Erfinder: Rusch, Uwe, 06408 Baalberge (DE)
(74) Vertreter: Thoma, Michael

(56) Entgegenhaltungen:
- EP-A2- 2 462 795
- WO-A1-97/21338
- DE-U1- 9 313 779

## Beschreibung

Die vorliegende Erfindung betrifft einen Verteilerkopf für eine landwirtschaftliche Verteilmaschine, insbesondere Sä- und/oder Düngemaschine, zum pneumatischen Verteilen von Verteilgut wie Saatgut, Dünger oder dergleichen, mit einer vorzugsweise pilzkopfförmigen Verteilerkammer, von der über den Umfang der Verteilerkammer verteilt eine Mehrzahl von Auslassstutzen abgehen, die über Verteilgutleitungen mit Ausbringelementen verbindbar sind.

Einen gattungsgemäßen Verteilerkopf einer pneumatischen Sämaschine zeigt beispielsweise die Schrift EP 24 62 795 A2. Hierbei sind die Auslassstutzen, an die die Schlauchleitungen anschließbar sind, an dem Verteilerkopf lösbar festgespannt, so dass sie demontiert werden können. Dabei sind in die Auslassstutzen Sperrklappen integriert, um den Ausfluss aus dem jeweiligen Anschlussstutzen sperren zu können. Ein ähnlicher Verteilerkopf ist auch aus der DE 93 13 779 bekannt. Ferner zeigt die Schrift WO 97/21338 A1 einen Verteilerkopf mit Sperrklappen, die bodenseitige Bypassöffnungen verdecken, wenn die Sperrklappen die bestimmungsgemäße Austrittsöffnung, an die ein Schlauch anschließbar ist, freigeben.

Bei pneumatisch arbeitenden Sämaschinen werden üblicherweise mit Hilfe eines Luftstroms Saatgut, Dünger oder ähnliche körnige Stoffe aus einem Saatgutbehälter durch ein Rohr zu einem Verteilerkopf geführt, in dem das Saatgut bzw. der Dünger oder dergleichen auf eine Mehrzahl von Auslässen verteilt wird, die über Rohre, Schläuche oder ähnliche Verteilgutleitungen mit entsprechenden Ausbringelementen verbunden sind, die in Reihe nebeneinander bzw. versetzt hintereinander angeordnet sind. Über diese Ausbringelemente wird das auszubringende Gut in mehreren Reihen nebeneinander auf dem bzw. in dem Boden abgelegt. Der Verteilerkopf sorgt hierbei dafür, dass das Saatgut zumindest näherungsweise gleichmäßig auf die im Verteilerkopf angeordneten Auslässe und die damit verbundenen Ausbringelemente verteilt wird. Üblicherweise umfasst der Verteilerkopf hierzu einen zumindest näherungsweise rotationssymmetrischen, grob gesprochen pilzkopfförmigen Verteilerraum, dem durch ein zentrales Zuführrohr das Saatgut über einen Luftstrom eingeblasen wird, sodass sich das Saatgut in dem Verteilerraum auf die außen liegend angeordneten Auslässe verteilt.

Dabei ist es vorteilhaft, zumindest einige der genannten Auslässe einzeln oder gruppenweise absperren zu können, um in Fahrgassen das Ausbringen von Saatgut zu verhindern oder die Reihenabstände variieren zu können. Bei bestimmten Getreidesorten, beispielsweise bei Weizen, hat das Saatgut bekanntlich eine kleine Kornabmessung und kann in relativ engen Reihen und mit kleinen Abständen zwischen den Saatgutkörnern in der jeweiligen Reihe gesät werden, während bei anderen Sorten wie beispielsweise Mais mit einer größeren Kornabmessung normalerweise ein größerer Abstand zwischen den Reihen und auch zwischen den Körnern benötigt wird. Um beispielsweise jede zweite Reihe absperren zu können, kann im Auslass des Verteilerkopfs ein schaltbares Blockierelement Verwendung finden, das je nach Stellung den entsprechenden Auslasskanal entweder freigibt oder absperrt. Solche Verteilerköpfe mit schaltbaren Blockierelementen bzw. Weichen zeigen beispielsweise die Schriften DE 87 08 456, DE 196 13 785 C1 oder EP 0 752 203 B1.

Bei solchen Verteilerköpfen mit den Auslässen zugeordneten Blockierelementen bzw. Schaltweichen kommt es bisweilen zu Störungen des Blockierelements, aber auch zu Abnutzungen und Formverschleiß, der die gleichmäßige Luftführung in der Verteilerkammer beeinträchtigt und zu ungleichmäßigen Verteilungen führt, sodass die Auslassstutzen bisweilen ausgetauscht werden müssen. Hierzu wurde es bereits vorgeschlagen, die genannten Auslassstutzen als separate Bauteile auszubilden, sodass sie vom Verteilerkammerkorpus gelöst werden können und nicht gleich der gesamte Verteilerkopf getauscht werden muss. Die Auslassstutzen sind hierbei üblicherweise im Inneren der Verteilerkammer von oben her auf bodenseitige Öffnungen im Verteilerkammerkorpus gesetzt und werden durch Aufsetzen des Verteilerkammerdeckels bzw. Festziehen des Deckels fixiert. Dies macht jedoch den Austausch der genannten Auslassstutzen nicht ganz einfach, da alle Auslassstutzen gleichzeitig gelöst werden bzw. der Deckel beim Aufsetzen wieder so justiert werden muss, dass er alle Auslassstutzen gleichermaßen passgenau festsetzt. Zum anderen ist eine Vielzahl von Montage- bzw. Demontageschritten notwendig, was einen Auslassstutzenwechsel mühevoll macht. Einen entsprechenden Verteilerkopf mit solchen Auslassstutzen, in die eine Schaltweiche integriert ist, zeigt beispielsweise die EP 0 752 203 B1. Ähnliche Verteilerköpfe zeigen die DE 11 2004 001 272 T5 oder DE 20 2008 008 846.

Der vorliegenden Erfindung liegt hiervon ausgehend die Aufgabe zugrunde, einen verbesserten Verteilerkopf der genannten Art zu schaffen, der Nachteile des Standes der Technik vermeidet und Letzteren in vorteilhafter Weise weiterbildet. Insbesondere soll die Reparaturfreundlichkeit erhöht werden, ohne die Schaltbarkeit der Auslässe und die Rückführung des Verteilguts bei blockierten Auslässen zu beeinträchtigen.

Erfindungsgemäß wird diese Aufgabe durch einen Verteilerkopf gemäß Anspruch 1 gelöst. Bevorzugte Ausgestaltungen der Erfindung sind Gegenstand der abhängigen Ansprüche.

Es wird also vorgeschlagen, die Auslassstutzen von der Außenseite des Verteilerkopfes her montierbar bzw. demontierbar auszubilden, ohne hierfür den Verteilerkopf öffnen bzw. zerlegen zu müssen. Die zu lösenden Verbindungselemente sind von außen zugänglich bzw. betätigbar, wobei die Verbindungskonturen zwischen Verteilerkammerkorpus und Auslassstutzen so gestaltet sind, dass der jeweilige Auslassstutzen nach außen vom Verteilerkammerkorpus entfernt werden kann. Erfindungsgemäß sind zwischen den Auslassstutzen und der Verteilerkammer vorgesehene Steckverbindungen derart ausgebildet, dass die Auslassstutzen von einer Außenseite der Verteilerkammer her in die Verteilerkammer einsteckbar und aus dieser herausziehbar sind. Insbesondere braucht hierzu der Deckel der Verteilerkammer nicht abgenommen oder der Verteilerkammerkorpus gar noch weiter zerlegt werden. Der jeweilige Auslassstutzen braucht lediglich nach außen vom Verteilerkammerkorpus abgezogen bzw. wegbewegt werden, ggf. nach Lösen eines Fixiermittels wie einer Schraube oder einer Klemme oder dergleichen, die vorteilhafterweise von außen her betätigbar ist.

Die genannten Steckverbindungen können hierbei grundsätzlich verschiedene Bewegungsachsen besitzen, beispielsweise zum Einstecken bzw. Herausziehen eine Schwenkbewegung oder eine Drehbewegung vorsehen und ggf. mit einer translatorischen Bewegung kombinieren, wobei insbesondere auch eine einfache, translatorische Steckbewegung zum Einstecken und Lösen vorgesehen sein kann. In Weiterbildung der Erfindung kann der die Verteilerkammer bildende Verteilerkammerkorpus in seiner Umfangswandung Einstecköffnungen besitzen, in die die Auslassstutzen radial von außen her einsteckbar sind. Besitzt der Verteilerkopf insgesamt eine etwa zylindrische Konturierung, können die genannten Einstecköffnungen in einer Mantelfläche des Verteilerkammerkorpus vorgesehen sein, so dass die Auslassstutzen zumindest näherungsweise radial bzw. senkrecht zur Symmetrieachse des Verteilerkopfes eingesteckt werden können. Grundsätzlich wäre es allerdings auch möglich, die genannten Einstecköffnungen nicht in der Mantelfläche, sondern beispielsweise im Boden oder auch kombiniert in der Mantelfläche und im Boden des Verteilerkammerkorpus auszubilden, je nachdem, wie die Innenkonturierung der Verteilerkammer und die gewünschte Verteilerströmung in der Verteilerkammer aussehen soll.

Um die Auslassstutzen fest und wackelfrei, insbesondere luftdicht an den Verteilerkammerkorpus anschließen zu können, können in Weiterbildung der Erfindung spannbare Klemmmittel zum Festklemmen der Auslassstutzen am Verteilerkammerkorpus vorgesehen sein, wobei in vorteilhafter Weiterbildung der Erfindung die genannten Klemmmittel an den Auslassstutzen und/oder an dem Verteilerkammerkorpus vorgesehen sein können, beispielsweise in Form eines Schnellspannhebels oder einer Exzenterklemme.

In Weiterbildung der Erfindung sind hierbei für jeden Auslassstutzen separate Klemmmittel vorgesehen, die jeweils unabhängig von den restlichen Klemmmitteln der übrigen Auslassstutzen lösbar und spannbar sind, so dass zum Wechsel eines Auslassstutzens nicht gleich mehrere oder gar alle Auslassstutzen gelockert werden müssen.

Um trotz einfacher Steckbarkeit eine exakte Ausrichtung der einsteckbaren Auslassstutzen zu erreichen, können in Weiterbildung der Erfindung die Einstecköffnungen im Verteilerkammerkorpus und/oder der Einsteckabschnitt der Auslassstutzen eine von der Kreisform abweichende Konturierung, insbesondere eine eckige wie beispielsweise viereckige Konturierung besitzen. In Weiterbildung der Erfindung können die genannten Einstecköffnungen rechteckig konturiert sein und die darin einsteckbaren Einsteckabschnitte der Auslassstutzen rechteckige Querschnitte besitzen. Die Einsteckabschnitte und/oder die Einstecköffnungen können hierbei bezüglich der Steckachse konisch bzw. leicht pyramidenförmig bzw. keilförmig konturiert sein bzw. mit einer Klemmschräge versehen sein, so dass sich die Auslassstutzen beim Einstecken durch die zunehmende Durchmesserüberdeckung bzw. Presspassung der Bemaßungen mit den Einstecköffnungen klemmen.

In Weiterbildung der Erfindung können die Auslassstutzen verstellbare bzw. schaltbare Blockierelemente zum wahlweisen Blockieren und Freigeben eines durch den jeweiligen Auslassstutzen gehenden Auslasskanals umfassen, um zumindest einige der Auslassstutzen einzeln oder gruppenweise blockieren zu können. Die genannten Blockierelemente können beispielsweise schwenkbar an den Auslassstutzen gelagerte Ventilklappen umfassen.

Zur Betätigung der genannten Blockierelemente können die Auslassstutzen einen Stellaktor umfassen, welcher vorzugsweise motorisch arbeitend ausgebildet ist, so dass das jeweilige Blockierelement fremdenergiebetätigt verstellt werden kann.

Die Auslassstutzen können vorteilhafterweise mit den genannten Blockierelementen und/oder mit den genannten Stellaktoren zu einer vormontierten Baugruppe zusammengefasst sein, die als Ganzes von außen her in die Verteilerkammer einsetzbar und herausziehbar ist. Insbesondere kann jeder Auslassstutzen ein integriertes Blockierelement und einen ebenfalls am Auslassstutzen angeordneten Stellaktor vorzugsweise in Form eines Elektromotors zur Betätigung des Blockierelements umfassen, so dass die gesamte Baugruppe umfassend den Auslassstutzen, das integrierte Blockierelement und den diesem zugeordneten Stellaktor von außen her in die Verteilerkammer eingesetzt und herausgezogen werden kann.

In vorteilhafter Weiterbildung der Erfindung können Rückführleitungen bzw. eine Rückführeinrichtung zum Rückführen des Verteilguts bei blockierten Auslassstutzen in den Verteilerkopf integriert sein, um das rückzuführende Verteilgut gleich im bzw. am Verteilkopf wieder in den Zufuhrkreislauf einzuspeisen.

Insbesondere kann die Verteilerkammer bodenseitig angeordnete Rückführöffnungen zum Rückführen des Verteilguts von einem blockierten Auslassstutzen aufweisen, welche Rückführöffnungen derart angeordnet und ausgebildet sind, dass sie von einem eingesetzten Auslassstutzen und/oder dessen Blockierelement, wenn sich dieses in der blockierten Stellung befindet, überdeckt werden. Die Auslassstutzen können beim Einstecken in die Verteilerkammer über die genannten Rückführöffnungen im Boden der Verteilerkammer geschoben werden, so dass bei geschlossenen Blockierelementen das Verteilgut durch die genannten Rückführöffnungen im Boden der Verteilerkammer fällt, während bei geöffneten Blockierelementen die genannten Rückführöffnungen verschlossen sind und das Verteilgut über die Auslassstutzen zu den Ausbringelementen gelangt.

Insbesondere können die Auslassstutzen an ihren in die Verteilerkammer einsteckbaren Einsteckabschnitten Rückführöffnungen aufweisen, die sich im eingesteckten Zustand mit den vorgenannten Rückführöffnungen im Boden der Verteilerkammer zumindest teilweise überdecken und den genannten Blockierelementen so zugeordnet sind, dass sie je nach Stellung der Blockierelemente geöffnet oder geschlossen sind.

Erfindungsgemäß ist vorgesehen, die Rückführung des Ernteguts von den jeweils gesperrten Auslässen nicht mehr über einzelne, den jeweiligen Auslässen zugeordnete Rückführschläuche zu bewerkstelligen, sondern allen sperrbaren Auslässen des Verteilerkopfes eine gemeinsame Sammelrückführung zuzuordnen, die entsprechend großvolumig ausgebildet sein kann und die Rückführgeschwindigkeiten deutlich reduziert. Erfindungsgemäß ist die Rückführeinrichtung von einem das Steigrohr umgebenden Trichter gebildet, der mit seinem oberen Rand an die Verteilerkammer anschließt und mit seinem unteren Ende in das Steigrohr übergeht, so dass ein oberer Teil des Steigrohrs im Inneren der Trichterkammer liegt. Durch das Einleiten des rückgeführten Verteilguts in eine großvolumige Trichterkammer, die an den Boden der Verteilerkammer anschließt, verliert die das Verteilgut fördernde Druckluft deutlich ihre Förderwirkung bzw. -geschwindigkeit, so dass das rückgeführte Verteilgut deutlich an Geschwindigkeit verliert und im Wesentlichen nur von der Schwerkraft getrieben an der Trichterwandung herunterrutscht bzw. -rollt. Hierdurch ist die Eintrittsgeschwindigkeit in das Steigrohr und insbesondere die nach unten gerichtete Bewegungskomponente des rückgeführten Verteilguts deutlich geringer, wodurch es dem nach oben gehenden Luftstrom im Steigrohr deutlich einfacher gelingt, die rückgeführten Körner mitzureißen. Überraschenderweise beeinträchtigt die deutliche Querschnittsaufweitung, die für den rückgeführten Luftstrom am Übergang in den Trichterraum hinein eintritt, die Strömungsverhältnisse im Inneren der Verteilerkammer kaum. Bislang wurde immer der Ansatz vertreten, dass auch die Rückführleitungen im Wesentlichen denselben Querschnitt haben müssen wie die zu den Ausbringelementen führenden Ausbringleitungen, um bei einer Umschaltung von Ausbringen auf Rückführen die Strömungsverhältnisse in der Verteilerkammer nicht zu beeinflussen. Bei der vorgeschlagenen Trichterlösung jedoch tritt der Druckabfall erst stromab bzw. außerhalb der Verteilerkammer in dem Trichterraum auf, insbesondere dann, wenn die in den Trichter mündenden Rückführ- bzw. Bypassöffnungen dieselbe Querschnittsfläche besitzen wie die zu den Ausbringelementen führenden Auslässe.

In Weiterbildung der Erfindung kann der obere Rand des Trichters derart bemessen sein, dass der genannte obere Rand an die Verteilerkammer in einem Bereich eines äußeren Randabschnitts der Verteilerkammer anschließt. Vorteilerhafterweise kann die genannte Verteilerkammer radial innerhalb des oberen Trichterrands in ihrer Bodenwandung Bypassöffnungen besitzen, die in den von dem Trichter umschlossenen Trichterraum münden. Insbesondere kann der Rückführtrichter derart ausgebildet sein, dass der obere Rand im Wesentlichen von unten her an den Außenumfang bzw. einen daran angrenzenden Abschnitt des Bodens der Verteilerkammer anschließt, so dass der Trichter im Wesentlichen die gesamte Bodenseite der Verteilerkammer umgreift bzw. daran anschließt.

Grundsätzlich könnte der Trichter nach Art eines Auffangtrichters ein Stück weit vom Boden der Verteilerkammer beabstandet angeordnet sein und von Letzterer durch einen Spalt getrennt sein. Herabfallendes, rückgeführtes Verteilgut würde wie ein Regentropfen aufgefangen und im Trichter weiter nach unten auf das Steigrohr zugeleitet werden. In vorteilhafter Weiterbildung der Erfindung jedoch schließt der Trichter mit seinem oberen Trichterrand spaltfrei an die Wandung der Verteilerkammer an, insbesondere an den Boden der Verteilerkammer, wobei zwischen dem Trichter und der Wandung der Verteilerkammer eine feste, staub- und/oder luftdichte Verbindung vorgesehen sein kann, beispielsweise in Form einer Steckverbindung oder auch einer stoffschlüssigen Verbindung beispielsweise im Sinne einer integral einstückigen Ausbildung von Trichter und Verteilerkammerboden.

Die bodenseitigen Bypassöffnungen der Verteilerkammer können in Weiterbildung der Erfindung durch Verschlusselemente verschlossen und geöffnet werden, die in Abhängigkeit der Stellung der Blockierelemente, die die regulären Auslässe zu den Ausbringelementen blockieren, gesteuert sind, insbesondere derart, dass bei einem blockierten Blockierelement die zugehörige Bypassöffnung, die dem blockierten Auslass zugeordnet ist, geöffnet und bei nicht blockiertem Blockierelement eine zugehörige Bypassöffnung verschlossen ist.

Die genannten Blockierelemente können grundsätzlich verschieden ausgebildet sein, beispielsweise können die genannten Blockierelemente in Form von Ventilelementen beispielsweise in Form von Ventilschiebern oder Ventilklappen ausgebildet sein, die mit den Verschlusselementen für die Bypassöffnungen gekoppelt sein können, insbesondere derart, dass bei Öffnen der Ventilelemente für die regulären Auslässe die Verschlusselemente der Bypassöffnungen schließen und umgekehrt.

In Weiterbildung der Erfindung können die Blockierelemente und die genannten Verschlusselemente für die Bypassöffnungen auch jeweils durch ein gemeinsames verstellbares Ventilelement gebildet sein, vorzugsweise in Form eines Ventilschiebers oder einer Ventilklappe, wobei das genannte gemeinsame Ventilelement nach Art einer Weiche zwischen zwei Stellungen hin und her schaltbar sein kann derart, dass das Ventilelement in einer ersten Stellung die Bypassöffnung verschließt und die reguläre Auslassöffnung freigibt und umgekehrt in einer zweiten Stellung den genannten Auslass verschließt, aber die Bypassöffnung freigibt. In Weiterbildung der Erfindung kann bei einer bodenseitig vorgesehenen Bypassöffnung und umfangsseitig abgehenden Auslässen der Verteilerkammer eine Ventilklappe um eine bodenseitig angeordnete, liegende Achse schwenkbar gelagert sein derart, dass die Ventilklappe einerseits auf die bodenseitige Bypassöffnung schwenkbar ist oder andererseits aufrichtbar auf die Auslassöffnung schwenkbar ist.

Die Erfindung wird nachfolgend anhand eines bevorzugten Ausführungsbeispiels und zugehöriger Zeichnungen näher erläutert. In den Zeichnungen zeigen:
- Fig. 1:: eine schematische, perspektivische Darstellung einer landwirtschaftlichen, pneumatischen Verteilmaschine in Form einer Sämaschine nach einer vorteilhaften Ausführung der Erfindung,
- Fig. 2:: eine schematische Darstellung des Wegs des Saatgutaustrags und der hierbei wirksamen Maschinenkomponenten der Sämaschine aus Fig. 1,
- Fig. 3:: eine Schnittansicht durch den Verteilerkopf der Sämaschine aus den vorhergehenden Figuren, die den das Steigrohr des Verteilerkopfs umschließenden Trichter zur internen Rückführung des Saatguts von gesperrten Auslässen zeigt,
- Fig. 4:: eine perspektivische Ansicht des Verteilerkopfs mit vollständig angeschlossenen Auslassstutzen, und
- Fig. 5:: eine perspektivische Ansicht des Verteilerkopfs ähnlich Fig. 4, wobei nur ein einzelner Auslassstutzen montiert und die anderen Auslassstutzen demontiert sind, so dass die Einstecköffnungen in der Umfangsseite des Verteilerkammerkorpus zu sehen sind.

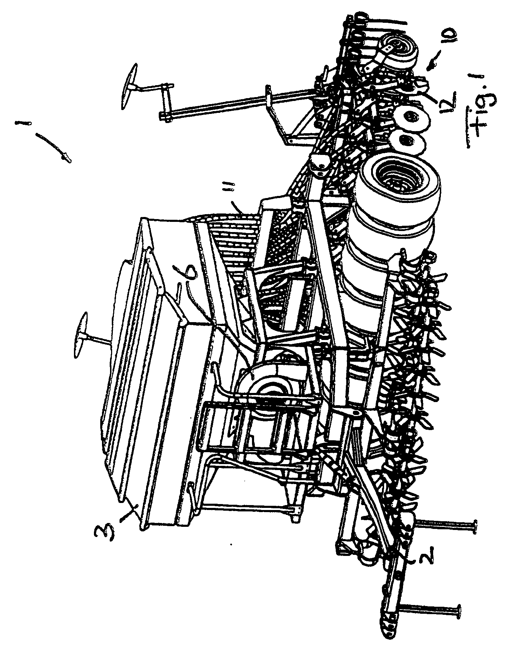

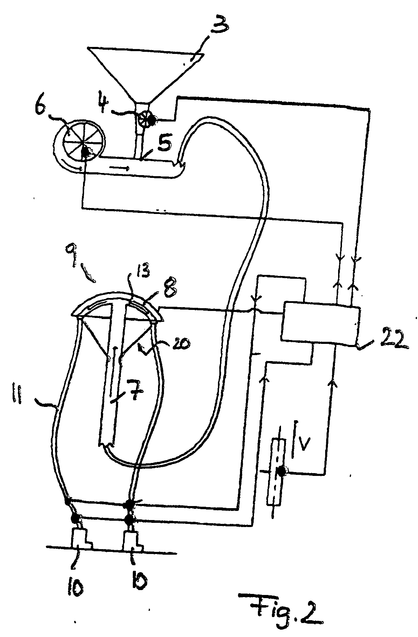

Wie Fig. 1 und 2 zeigen, kann die beispielsweise über ein Anbauelement 2 an einen Schlepper anbaubare Sä- und/oder Düngemaschine 1 einen Verteilgutspeicher 3 umfassen, aus dem durch eine zentrale Dosiervorrichtung 4, beispielsweise umfassend einen Dosierrotor, eine gewünschte Verteilgutmenge in Form von Samenkörnern, Düngemittelkörnern oder dergleichen in einen Förderkanal 5 gegeben werden kann. Mittels eines mit dem Förderkanal 5 verbindbaren Gebläses 6 oder einer anderen Druckluftvorrichtung kann das von der Dosiervorrichtung 4 bereitgestellte Verteilgut über den Förderkanal 5 und ein damit verbundenes aufrechtes, zentrales Steigrohr 7 pneumatisch in die Verteilerkammer 13 eines Verteilerkopfes 8 eines Saatgutverteilers 9 gefördert werden. Der genannte Verteilerkopf 8 verteilt das ankommende Verteilgut auf eine Mehrzahl von Ausbringelementen 10, mit denen der Verteilerkopf 8 jeweils über Ausbringleitungen bzw. -schläuche 11 verbunden ist. Die genannten Ausbringleitungen 11 sind mit Auslässen 14 des Verteilerkopfes 8 und über diese Auslässe 14 mit der Verteilerkammer 13 verbunden. Die Ausbringelemente 10 der Sä- und/oder Düngemaschine 1 können beispielsweise Säschare 12 umfassen, vgl. Fig. 1.

Wie Fig. 2 zeigt, kann eine Steuereinrichtung 22 über diverse Erfassungseinrichtungen Betriebsparameter an den verschiedenen Maschinenkomponenten, beispielsweise Taktung der Dosiervorrichtung oder Drehzahl des Gebläses 6, und/oder das Ergebnis betreffende Ausbringparameter wie beispielsweise abgegebene Körnerzahl überwachen, um in Abhängigkeit dieser Betriebs- und Ausbringparameter die Maschinenkomponenten zu steuern.

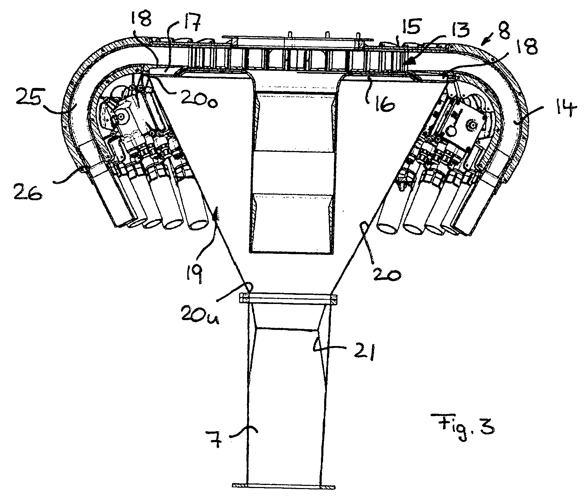

Der Verteilerkopf 8 umfasst einen insgesamt - grob gesprochen - pilzförmigen Verteilerkorpus 15, der gehäuseartig ausgebildet ist und in seinem Inneren die Verteilerkammer 13 begrenzt, die insbesondere rund, leicht tellerförmig gewölbt ausgebildet sein kann, vgl. Fig. 3. Das Steigrohr 7 bildet ein senkrecht angeordnetes Zuführrohr, das zentral, mittig von unten her in die genannte Verteilerkammer 13 mündet, so dass durch einen entsprechenden Luftstrom über das genannte Steigrohr 7 das Verteilgut wie Saatgut, Dünger oder ähnliche körnige Stoffe in die Verteilerkammer 13 eingeblasen werden können. In der genannten Verteilerkammer 13 prallen die Verteilgutkörner zunächst gegen die der Mündung des Steigrohrs 7 gegenüber angeordnete Deckenwandung, von wo aus sie sich radial nach außen verteilen.

Am radial außen liegenden Rand, insbesondere der dort vorgesehenen Umfangswandung, besitzt der Verteilkorpus 15 über den Umfang verteilt eine Vielzahl von Auslassöffnungen bzw. Auslässen 14, die - grob gesprochen - radial, ggf. leicht nach unten geneigt vom Verteilerkorpus 15 abgehen.

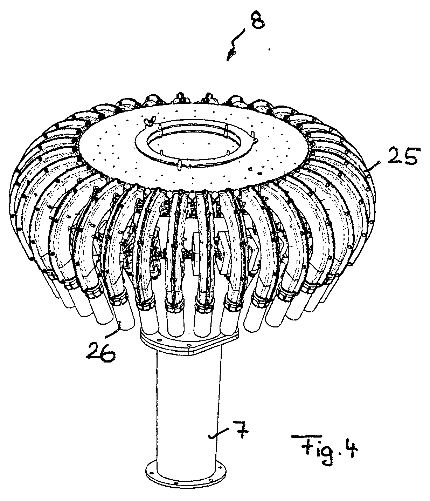

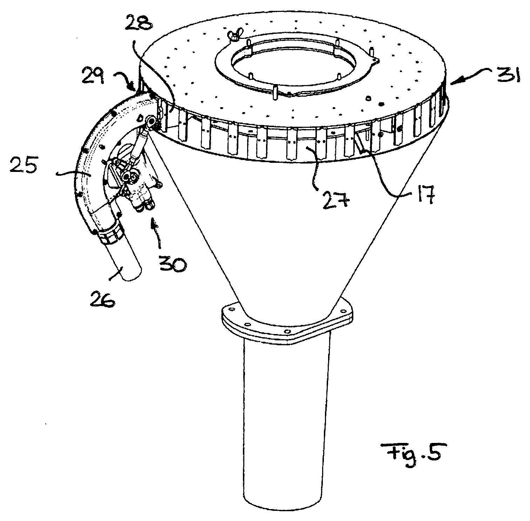

Wie die Figuren 4 und 5 zeigen, werden die genannten Auslässe 14 von Auslassstutzen 25 gebildet, die in der gezeichneten Ausführung einen bogenförmig gekrümmten Verlauf besitzen und in ihrem Inneren einen Auslasskanal aufweisen. Mit ihrem einen Ende sind die genannten Auslassstutzen 25 in den Verteilerkorpus 15 einsteckbar und mit ihrem anderen Ende an die Ausbringleitungen 11 anschließbar. Hierzu besitzen die Auslassstutzen 25 an ihren vom Verteilerkopf auskragenden Enden Leitungsanschlüsse beispielsweise in Form von SchlauchAuslassstutzen 26.

Wie Fig. 5 zeigt, besitzt der Verteilerkorpus 15 in seiner Umfangswandung bzw. in einem Wandungsabschnitt der Mantelfläche eine Vielzahl von verteilt angeordneten Einstecköffnungen 27, die eine rechteckige Öffnungskontur bzw. Querschnittsfläche besitzen können, wie dies Fig. 5 zeigt. In die genannten Einstecköffnungen 27 sind die Auslassstutzen 25 mit Einsteckabschnitten 28 radial von außen her in den Verteilerkorpus 15 einsteckbar, ohne dass hierzu der Verteilerkorpus 15 geöffnet, beispielsweise sein Deckel abgebaut werden müsste. Die Einsteckabschnitte 28 der Auslassstutzen 25 sind konturmäßig an die Einstecköffnungen 27 angepasst, insbesondere derart, dass sie passgenau und/oder luftdicht zusammensetzbare Steckverbindung 29 bilden, wobei durch eine leichte Schräge oder Konizität der Einsteckabschnitte 28 auch eine Klemmung erreicht werden kann. Optional können auch zusätzliche Klemmmittel beispielsweise in Form einer Klemmspange oder eines Klemmexzenters vorgesehen sein, um die Auslassstutzen 25 in den Einstecköffnungen 27 festzuklemmen. Vorteilhafterweise können die Auslassstutzen 25 kragenförmige Anlageflächen besitzen, die die Einsteckabschnitte 28 begrenzen und auf der Umfangsseite bzw. der Mantelfläche des Verteilerkorpus 15, in der die Einstecköffnungen 27 ausgebildet sind, aufstehen, wenn die Auslassstutzen 25 vollständig eingesteckt sind.

Die Auslassstutzen 25 besitzen vorteilhafterweise integrierte Blockierelemente 23 beispielsweise in Form von schwenkbaren Ventilklappen, um den jeweiligen Auslassstutzen 25 blockieren zu können. Die genannten Blockierelemente 23 können hierbei mit einem Stellaktor 30 verbunden sein, beispielsweise in Form eines Elektromotors, der vorteilhafterweise ebenfalls mit dem Auslassstutzen 25 zu einer vormontierten Baugruppe zusammengefasst ist.

Um bei blockierenden Blockierelementen 23 bzw. gesperrten Auslassstutzen 25 das am Austritt gehinderte Saatgut bzw. Verteilgut rückführen zu können, umfasst der Verteilerkopf 8 eine integrierte Rückführeinrichtung 19. Im Boden 16 des Verteilerkorpus 15 sind jeweils vor den genannten Auslässen 14 Bypassöffnungen 17 ausgebildet, die entlang eines Kranzes am äußeren Rand des Verteilerkorpusbodens 16 angeordnet sind. Den genannten Bypassöffnungen 17 und den zugehörigen Auslässen 14 sind jeweils schwenkbar gelagerte Klappen 18 zugeordnet, die zwischen einer die Auslässe 14 versperrenden Stellung und einer die Bypassöffnungen 17 verschließenden Stellung hin und her schwenkbar sind, so dass jeweils nur eine Öffnung eines Auslass- und Bypassöffnungspaares geöffnet ist. Grundsätzlich kann jedem Auslass 14 eine Bypassöffnung 17 zugeordnet sein, wobei je nach Anforderungen an die Abschaltung ggf. auch nur einem Teil, beispielsweise jedem zweiten Auslass 14 eine Bypassöffnung 17 zugeordnet sein kann. Vorteilhafterweise ist hierbei jeder Bypassöffnung 17 ein eigenes Verschlusselement bzw. eine eigene Klappe 18 zugeordnet, die vorteilhafterweise individuell betätigbar ausgebildet ist, so dass jede Bypassöffnung 17 mit zugehörigem Auslass 14 unabhängig von anderen Bypassöffnungen bzw. Auslässen verschließbar und freigebbar ist. Gegebenenfalls kann aber auch hier eine gruppenweise Zusammenfassung oder auch eine Zusammenfassung aller Verschlusselemente vorgesehen sein, wobei jedoch eine individuelle Betätigbarkeit bevorzugt ist, um Einzel- oder Gruppenabschaltungen individuell vornehmen zu können. Hierdurch können beispielsweise ein Fahrgassenschaltung vorgenommen werden, bei der die in einer Fahrgasse angeordneten Ausbringelemente abgesperrt werden, oder eine Halbseitenabschaltung, bei der eine Hälfte der Ausbringelemente beispielsweise auf einer rechten Seite der Sämaschine komplett abgeschaltet werden. Andere Abschaltungsvarianten sind möglich und von der Steuereinrichtung 22 realisierbar, welche die Klappen 18 bzw. Verschlusselemente und deren zugehörige Aktoren ansteuern kann.

Zur Rückführung der durch eine oder mehrere Bypassöffnungen 17 bodenseitig aus der Verteilerkammer 13 austretenden Körner in den Zuführkreislauf umfasst eine hierfür vorgesehene Rückführeinrichtung 19 einen Trichter 20, der das Steigrohr 7 umschließt, so dass sich das Steigrohr 7 mit seinem oberen Teil im Inneren des vom Trichter 20 umschlossenen Trichterraums erstreckt. Mit seinem oberen Rand 20o schließt der genannte Trichter 20 an den Boden des Verteilerkorpus 15 an, während das untere Ende 20u des Trichters 20 in das Steigrohr 7 mündet bzw. in dieses übergeht. Der obere Rand 20o des Trichters 20 entspricht in seinem Durchmesser im Wesentlichen dem maximalen Durchmesser der Verteilerkammer 13 bzw. dem Durchmesser, an welchem die Auslässe 14 von der Verteilerkammer 13 abgehen. Der genannte obere Rand 20o kann hierbei fest mit dem Boden 16 des Verteilerkorpus 15 verbunden sein, beispielsweise durch eine Steckverbindung.

Der Trichter 20 kann vorteilhafterweise kegelförmig, insbesondere kreiskegelförmig ausgebildet sein und sich je nach Gegebenheiten mit unterschiedlichen Kegelwinkeln nach oben hin zum Verteilerkorpus 15 aufweiten, wobei nach einer vorteilhaften Weiterbildung der Erfindung der Trichter 20 eine Aufweitung unter einem Kegelwinkel von 2x15° bis 2x50°, insbesondere etwa 2x25° bis 2x35° besitzen kann.

An seinem unteren Ende 20u ist der Trichter 20 fest mit dem Steigrohr 7 verbunden, insbesondere mit dessen unterem Teil bzw. kann der Trichter 20 in den unteren Teil des Steigrohrs 7 übergehen bzw. auslaufen. Der obere Teil des Steigrohrs 7 ist an der Einmündungsstelle des Trichters 20 durch einen ringförmigen Spalt vom unteren Teil des Steigrohrs 7 getrennt, so dass umfangsseitig vom Trichter 20 her rückgeführtes Verteilgut in das Steigrohr 7 gelangen kann.

Wie Fig. 3 zeigt, kann das Steigrohr 7 an der Einmündungsstelle des Trichters 20 bzw. unmittelbar unterhalb hiervon ein Düsenelement 21 umfassen, welches einerseits die Strömungsgeschwindigkeit im Bereich der Einleitung der rückgeführten Verteilgutkörner erhöht und andererseits den Luftstrom in den oberen Teil des Steigrohrs 7 leitet, um zu verhindern, dass Gebläseluft aus dem unteren Teil des Steigrohrs 7 in den Trichter 20 gelangt.

## Patentansprüche

1. Verteilerkopf für eine landwirtschaftliche Verteilmaschine, insbesondere Sä- und/oder Düngemaschine, zum pneumatischen Verteilen von Verteilgut wie Saatgut, Dünger oder dergleichen, mit einer vorzugsweise pilzkopfförmigen Verteilerkammer (13), von der über den Umfang der Verteilerkammer (13) verteilt eine Mehrzahl von Auslassstutzen (25) abgehen, die über Ausbringleitungen (11) mit Ausbringelementen (10) verbindbar sind, wobei zwischen den Auslassstutzen (25) und der Verteilerkammer (13) vorgesehene Steckverbindungen (29) derart ausgebildet sind, dass die Auslassstutzen (25) von einer Außenseite der Verteilerkammer (13) her in die Verteilerkammer (13) einsteckbar sind, **dadurch gekennzeichnet, dass** eine Rückführeinrichtung (19) zum Rückführen des Verteilguts von einem blockierten Auslassstutzen (25) einen Trichter (20) aufweist, der ein zentrales, in die Verteilerkammer (13) führendes Steigrohr (7) umgibt, wobei der Trichter (20) mit seinem oberen Ende (20o) an die Verteilerkammer (13) anschließt und mit seinem unteren Ende (20u) in das Steigrohr (7) übergeht, so dass ein oberer Teil des Steigrohrs (7) im Inneren der Trichterkammer liegt.

2. Verteilerkopf nach dem vorhergehenden Anspruch, wobei ein die Verteilerkammer (13) bildenden Verteilerkorpus (15) in seiner Umfangswandung (31) Einstecköffnungen (27) besitzt, in die die Auslassstutzen (25) radial von außen her einsteckbar sind.

3. Verteilerkopf nach dem vorhergehenden Anspruch, wobei die Einstecköffnungen (27) eine von der Kreisform abweichende Umrisskontur besitzen, insbesondere rechteckig ausgebildet sind.

4. Verteilerkopf nach Anspruch 2, wobei die Auslassstutzen (25) und/oder der Verteilerkorpus (15) spannbare Klemmmittel zum Festklemmen der Auslassstutzen (25) am Verteilerkorpus (15) aufweisen.

5. Verteilerkopf nach dem vorhergehenden Anspruch, wobei für jeden Auslassstutzen (25) separate Klemmmittel vorgesehen sind, die jeweils unabhängig von den Klemmmitteln der übrigen Auslassstutzen (25) lösbar und spannbar sind.

6. Verteilerkopf nach einem der vorhergehenden Ansprüche, wobei die Auslassstutzen (25) jeweils ein verstellbares Blockierelement (23) zum wahlweisen Blockieren und Freigeben eines durch den Auslassstutzen (25) führenden Auslasskanals und einen Stellaktor (30) zum vorzugsweise motorischen Betätigen des Blockierelements (23) umfassen, wobei die Auslassstutzen (25) zusammen mit dem Blockierelement (23) und dem zugehörigen Stellaktor (30) jeweils eine vormontierte Baugruppe bilden, die als Ganzes von außen her in die Verteilerkammer (13) einsteckbar und aus dieser herausziehbar ist.

7. Verteilerkopf nach dem vorhergehenden Anspruch, wobei die Verteilerkammer (13) bodenseitig vorgesehene Rückführöffnungen (17) zur Rückführung des Verteilguts von einem blockierten Auslassstutzen (25) aufweist, welche Rückführöffnungen (17) derart angeordnet und ausgebildet sind, dass sie jeweils von einem eingesetzten Auslassstutzen (25) und/oder dessen Blockierelement (23), wenn sich dieses in seiner blockierten Stellung befindet, überdeckt sind.

8. Verteilerkopf nach dem vorhergehenden Anspruch, wobei die Auslassstutzen (25) in ihren in die Verteilerkammer (13) einsteckbaren Einsteckabschnitten (28) Rückführöffnungen besitzen, die im eingesetzten Zustand der Auslassstutzen (25) sich mit den bodenseitigen Rückführöffnungen (17) der Verteilerkammer (13) überdecken.

9. Verteilerkopf nach einem der vorhergehenden Ansprüche, wobei der obere Rand (20o) des Trichters (20) an einem äußeren Randabschnitt der Verteilerkammer (13), insbesondere einen die Verteilerkammer nach unten hin begrenzenden Verteilerkammerboden (16), anschließt, wobei die Verteilerkammer (13) radial innerhalb des oberen Trichterrands (20o) bodenseitige Rückführöffnungen (32) besitzt, die in den von dem Trichter (20) umschlossenen Trichterraum münden.

10. Verteilerkopf nach einem der vorhergehenden Ansprüche, wobei der obere Trichterrand (20o) spaltfrei mit dem Boden (16) der Verteilerkammer (13) verbunden ist.

## Claims

1. A distributor head for an agricultural distributing machine, in particular sowing and/or fertilizing machine, for pneumatically distributing material to be distributed such as seeds, fertilizer or the like, with a preferably mushroom-shaped distributor chamber (13) from which a plurality of outlet ports (25) distributed around the circumference of the distributor chamber (13) extend, which via spreading lines (11) are connectable with spreading elements (10), wherein plug-in connections (29) provided between the outlet ports (25) and the distributor chamber (13) are formed such that the outlet ports (25) can be plugged into the distributor chamber (13) from an outside of the distributor chamber (13), **characterized in that** a recirculating device (19) for recirculating the material to be distributed from a blocked outlet port (25) includes a funnel (20) which surrounds a central riser pipe (7) leading into the distributor chamber (13), wherein the funnel (20) with its upper end (20o) adjoins the distributor chamber (13) and with its lower end (20u) transitions into the riser pipe (7), so that an upper part of the riser pipe (7) lies in the interior of the funnel chamber.

2. The distributor head according to the preceding claim, wherein a distributor body (15) forming the distributor chamber (13) has plug-in openings (27) in its circumferential wall (31), into which the outlet ports (25) can be plugged radially from outside.

3. The distributor head according to the preceding claim, wherein the plug-in openings (27) have an outline contour deviating from the circular shape, in particular are formed rectangular.

4. The distributor head according to claim 2, wherein the outlet ports (25) and/or the distributor body (15) include tensionable clamping means for clamping the outlet ports (25) to the distributor body (15).

5. The distributor head according to the preceding claim, wherein for each outlet port (25) separate clamping means are provided, which each are releasable and tensionable independent of the clamping means of the remaining outlet ports (25).

6. The distributor head according to any of the preceding claims, wherein the outlet ports (25) each comprise an adjustable blocking element (23) for selectively blocking and clearing an outlet channel leading through the outlet port (25) and an actuator (30) for the preferably motorized actuation of the blocking element (23), wherein the outlet ports (25) together with the blocking element (23) and the associated actuator (30) each form a premounted assembly which as a whole can be plugged into the distributor chamber (13) from outside and can be withdrawn from the same.

7. The distributor head according to the preceding claim, wherein the distributor chamber (13) includes recirculation openings (17) provided at the bottom for recirculating the material to be distributed from a blocked outlet port (25), which recirculation openings (17) are arranged and formed such that they each are covered by an inserted outlet port (25) and/or its blocking element (23), when the same is in its blocked position.

8. The distributor head according to the preceding claim, wherein the outlet ports (25) have recirculation openings in their plug-in portions (28) to be plugged into the distribution chamber (13), which in the inserted condition of the outlet ports (25) overlap with the bottom-side recirculation openings (17) of the distributor chamber (13).

9. The distributor head according to any of the preceding claims, wherein the upper edge (20o) of the funnel (20) adjoins an outer edge portion of the distributor chamber (13), in particular a distributor chamber bottom (16) downwardly delimiting the distributor chamber, wherein the distributor chamber (13) has bottom-side recirculation openings (32) radially within the upper funnel edge (20o), which open into the funnel space enclosed by the funnel (20).

10. The distributor head according to any of the preceding claims, wherein the upper funnel edge (20o) is connected with the bottom (16) of the distributor chamber (13) without leaving a gap.

## Revendications

1. Tête de distribution pour une machine de distribution agricole, en particulier un distributeur de semence et/ou d'engrais, pour la distribution pneumatique de produits à distribuer tel que les semences, les engrais ou similaires, comportant une chambre de distribution (13) de préférence en forme de champignon, de laquelle partent une pluralité de tubulures de sortie (25) réparties sur la périphérie de la chambre de distribution (13), lesquelles peuvent être reliées avec des éléments d'épandage (10) par l'intermédiaire de conduites d'épandage (11), des raccords enfichables (29) prévus entre les tubulures de sortie (25) et la chambre de distribution (13) étant réalisés de telle sorte que les tubulures de sortie (25) peuvent être enfichées dans la chambre de distribution (13) depuis une face extérieure de la chambre de distribution (13), **caractérisée en ce qu'**un dispositif de ramenée (19) pour ramener le produit à distribuer depuis une tubulure de sortie (25) bloquée présente une trémie (20) qui entoure un tuyau de montée (7) central menant dans la chambre de distribution (13), la trémie (20) étant raccordée avec son extrémité supérieure (20o) à la chambre de distribution (13) et se prolongeant avec son extrémité inférieure (20u) dans le tuyau de montée (7), de telle sorte qu'une partie supérieure du tuyau de montée (7) se trouve à l'intérieur de la chambre de trémie.

2. Tête de distribution selon la revendication précédente, dans laquelle un corps de distribution (15) formant la chambre de distribution (13) possède dans sa paroi périphérique (31) des orifices d'enfichage (27) dans lesquels les tubulures de sortie (25) peuvent être enfichées radialement depuis l'extérieur.

3. Tête de distribution selon la revendication précédente, dans laquelle les orifices d'enfichage (27) possèdent un contour de profil qui diffère de la forme circulaire et sont réalisés en particulier rectangulaires.

4. Tête de distribution selon la revendication 2, dans laquelle les tubulures de sortie (25) et/ou le corps de distribution (15) présentent des moyens de serrage susceptibles d'être tendus pour serrer à bloc les tubulures de sortie (25) sur le corps de distribution (15).

5. Tête de distribution selon la revendication précédente, dans laquelle pour chaque tubulure de sortie (25) sont prévus des moyens de serrage séparés qui peuvent être desserrés et serrés indépendamment des moyens de serrage des autres tubulures de sortie (25).

6. Tête de distribution selon l'une des revendications précédentes, dans laquelle les tubulures de sortie (25) comprennent chacune un élément de blocage (23) réglable pour bloquer et libérer sélectivement un canal de sortie menant à travers la tubulure de sortie (25), et un actionneur de réglage (30) pour actionner de préférence de façon motorisée l'élément de blocage (23), les tubulures de sortie (25) formant conjointement avec l'élément de blocage (23) et l'actionneur de réglage (30) un ensemble préassemblé respectif qui peut être enfiché dans la chambre de distribution (13) et retiré de celle-ci comme un tout.

7. Tête de distribution selon la revendication précédente, dans laquelle la chambre de distribution (13) présente des orifices de ramenée (17) prévus sur le fond pour ramener le produit de distribution depuis une tubulure de sortie (25) bloquée, lesquels orifices de ramenée (17) étant agencés et réalisés de telle sorte qu'ils sont chacun recouverts par une tubulure (25) mise en place et/ou par son élément de blocage (23) lorsque celui-ci se trouve dans sa position bloquée.

8. Tête de distribution selon la revendication précédente, dans laquelle les tubulures de sortie (25) possèdent dans leurs tronçons d'enfichage (28) enfichables dans la chambre de distribution (13) des orifices de ramenée qui, dans l'état de mise en place des tubulures de sortie (25), se superposent avec les orifices de ramenée (17) prévus sur le fond de la chambre de distribution (13).

9. Tête de distribution selon l'une des revendications précédentes, dans laquelle le bord supérieur (20o) de la trémie (20) se raccorde à un tronçon de bord extérieur de la chambre de distribution (13), en particulier à un fond de chambre de distribution (16) limitant la chambre de distribution vers le bas, la chambre de distribution (13) possédant, radialement à l'intérieur du bord supérieur de trémie (20o), des orifices de ramenée (32) prévus sur le fond qui débouchent dans l'espace de trémie entouré par la trémie (20).

10. Tête de distribution selon l'une des revendications précédentes, dans laquelle le bord supérieur de trémie (20o) est relié sans fente avec le fond (16) de la chambre de distribution (13).
